Europäisches Patentamt

European Patent Office

Office européen des brevets

(19)

(11) Numéro de publication: **0 000 007 B2**

(12) **NOUVEAU FASCICULE DE BREVET EUROPEEN** ·

(45) Date de publication du nouveau fascicule du brevet:
**21.11.84**

(51) Int. Cl.³: **C 08 F 10/00,** C 08 F 4/64, C 08 F 4/02

(21) Numéro de dépôt: **78200026.9**

(22) Date de dépôt: **01.06.78**

(54) Procédé pour la polymérisation des alpha-oléfines et procédé de préparation de complexes catalytiques solides utilisables pour cette polymérisation.

(30) Priorité: **06.06.77 LU 77489**

(43) Date de publication de la demande:
**20.12.78 Bulletin 78/1**

(45) Mention de la délivrance du brevet:
**20.05.81 Bulletin 81/20**

(45) Mention de la décision concernant l'opposition:
**21.11.84 Bulletin 84/47**

(84) Etats contractants désignés:
**BE CH DE FR GB LU NL SE**

(56) Documents cités:
**DE - A - 2 123 356**
**DE - A - 2 259 516**
**DE - A - 2 461 677**
**DE - A - 2 626 097**
**FR - A - 2 016 081**
**FR - A - 2 051 159**
**FR - A - 2 093 306**
**FR - A - 2 162 395**
**FR - A - 2 189 429**
**FR - A - 2 243 208**
**FR - A - 2 307 824**
**FR - A - 2 324 649**

(73) Titulaire: **SOLVAY & Cie (Société Anonyme), Rue du Prince Albert, 33, B-1050 Bruxelles (BE)**

(72) Inventeur: **Bienfait, Charles, Mereldreef, 75, B-2850 Keerbergen (BE)**

# 0 000 007

## Description

La présente invention concerne un procédé perfectionné pour la polymérisation des alpha-oléfines. Elle concerne également un procédé de préparation de complexes catalytiques solides utilisables pour cette polymérisation.

Il est connu d'utiliser, pour la polymérisation à basse pression des oléfines, des systèmes catalytiques comprenant un composé de métal de transition et un composé organométallique.

On connaît aussi, par les brevets belges 791 676 du 21. 11. 1972 et 799 977 du 24. 5. 1973 au nom de la Demanderesse, des systèmes catalytiques dont un constituant est obtenu en faisant réagir entre eux:

(1) un composé oxygéné organique ou un halogénure d'un métal, tels que l'éthylate de magnésium ou le dichlorure de magnésium,

(2) un composé oxygéné organique d'un métal de transition, tel que le tétrabutylate de titane, et

(3) un halogénure d'aluminium, tel que le dichlorure d'éthylaluminium.

Ces systèmes catalytiques sont uniques par les avantages extrêmement importants qu'ils présentent. Ainsi, leur activité et leur productivité sont très élevées. Leur préparation est extrêmement simple et ne conduit à aucun sous-produit polluant. Enfin, la morphologie du polymère obtenu permet de polymériser en suspension en continu avec une teneur relative en polymère très élevée et donc une quantité relative de diluant à traiter avant recyclage très faible.

Cependant, l'utilisation de systèmes catalytiques tels que celui décrit ci-dessus présente encore un inconvénient sérieux lorsqu'ils sont utilisés dans un procédé où le polymère est obtenu directement sous forme de particules. On a constaté en effet que les polymères obtenus en particules directement à leur intervention, quoique de granulométrie régulière, contiennent un pourcentage relativement élevé de particules fines et ont une grosseur moyenne des particules relativement faible.

La morphologie des particules de ces polymères pose dès lors des problèmes au cours de leur séchage, de leur stockage, de leur transport, de leur manipulation et de leur mise en oeuvre par les techniques connues de moulage. Les tentatives réalisées jusqu'à présent pour augmenter la grosseur moyenne des particules des polymères obtenues directement par polymérisation au moyen des systèmes catalytiques décrits ci-dessus n'ont pas été complètement satisfaisantes. C'est ainsi qu'on a constaté qu'une certaine augmentation du diamètre moyen des particules pouvait être obtenue en élevant la température à laquelle on met l'halogénure d'aluminium en oeuvre. Cette augmentation du diamètre moyen s'accompagne toutefois malencontreusement d'une diminution du poids spécifique apparent et d'un élargissement important de la distribution granulométrique des particules.

Le but principal de la présente invention est donc l'obtention, sans les effets secondaires néfastes susmentionnés, de polyoléfines dont le pourcentage de fines particules est réduit et dont la grosseur moyenne des particules est plus élevée.

Par ailleurs, les polyoléfines sont de plus en plus fréquemment mises en oeuvre sous forme de poudres, c'est-à-dire sous forme de particules denses et régulières dont un pourcentage important présente un diamètre moyen supérieur à 250 microns, de préférence supérieur à 500 microns.

Les poudres de polyoléfines sont appréciées particulièrement pour la mise en oeuvre par injection. D'autres débouchés intéressants des poudres de polyoléfines sont la réalisation d'enduits par diverses techniques (enduction électrostatique, enduction par pulvérisation, etc) et l'utilisation comme additifs, agents de démoulage, cires, compositions pour peintures, liants pour textiles non tissés, etc.

Un autre but de la présente invention est la fabrication de poudres de polyoléfines au moyen de procédé de polymérisation qui donnent directement des polymères sous forme de particules qui ont les caractéristiques morphologiques des poudres utilisées dans les procédés mentionnés plus haut.

L'invention est basée sur al découverte surprenante qu'une classe tout à fait particulière de systèmes catalytiques décrits plus haut permet d'obtenir sans affecter les avantages inhérents à ces systèmes, des polyoléfines sous forme de particules denses et dures, de diamètre moyen élevé, de distribution granulométrique serrée et de poids spécifique apparent élevé. Ces propriétés les rendent particulièrement aptes à être mises en oeuvre sous forme de poudres lors de leur transformation en objets finis.

La présente invention concerne donc un procédé pour la polymérisation des alpha-oléfines dans lequel on opère en présence d'un système catalytique comprenant un composé organométallique d'un métal des groupes Ia, IIa, IIb, IIIb et IVb du Tableau Périodique et un complexe catalytique solide préparé en faisant réagir entre eux:

(1) au moins un composé (M) choisi parmi les composés oxygénés organique du magnésium ne contenant que des liaisons magnésium-oxygéne-radical organique;

(2) au moins un composé (T) choisi parmi les composés oxygénés oragniques du titane ne contenant que des liaisons titane-oxygéne-radical organique;

(3) au moins un halogénure d'aluminium (A), ce dernier étant choisi parmi les chlorures organoaluminiques de formule générale $AlR_n Cl_{3-n}$ dans laquelle R est le radical isobutyle et n est un nombre tel que $1 \leq n \leq 1,5$ et en ce que la température du milieu réactionnel pendant que le chlorure organoaluminique est mis en oeuvre est comprise entre 60 et 65° C.

Par composés oxygénés organiques du magnésium et du titane, on entend désigner tous les composés où un radical organique quelconque est lié au métal par l'intermédiaire de l'oxygène, c'est-à-dire

2

tous les composés ne comprenant que des liaisons métal-oxygène radical organique par atome de métal. Les radicaux organiques liés au métal par l'intermédiaire de l'oxygène sont quelconques. Ils sont choisis de préférence parmi les radicaux comprenant de 1 à 20 atomes de carbone et, plus particulièrement, parmi ceux comprenant de 1 à 10 atomes de carbone. Les meilleurs résultats sont obtenus lorsque ces radicaux comprennent de 2 à 6 atomes de carbone. Ces radicaux peuvent être saturés ou insaturés, à chaîne ramifiée, à chaîne droite ou cycliques; ils peuvent également être substitués ou comporter des hétéroatomes, tels que le silicium, le soufre, l'azote ou le phosphore, dans leur chaîne. Ils sont choisis de préférence parmi les radicaux hydrocarbonés et en particulier parmi les radicaux alkyle (linéaires ou branchés), alkényle, aryle, cycloalkyle, arylalkyle, alkylaryle, acyle et leurs dérivés substitués.

Parmi les composés (M) entrant dans la famille des composés oxygénés organiques du magnésium, on peut citer:
— les alkoxydes, tels que le méthylate, l'éthylate, l'isopropylate, le décanolate et le cyclohexanolate,
— les phénoxydes, tels que le phénate, le naphténate, l'anthracénate, le phénantrénate et le crésolate,
— les carboxylates éventuellement hydratés, tels que l'acétate, le stéarate, le benzoate, le phénylacétate, l'adipate, le sébacate, le phtalate, l'acrylate et l'oléate,

Il est bien entendu qu'entrent également dans le cadre de l'invention les composés oxygénés organiques du magnésium suivants:
— les composés comprenant plusieurs radicaux organiques différents, tels que le méthoxyéthylate de magnésium, et
— les mélanges de deux ou de plusieurs des composés oxygénés organiques du magnésium définis cidessus.

Les meilleurs résultats sont obtenus lorsque le composé (M) du magnésium est un dialkoxyde.

Les réactifs (2) utilisés pour préparer les complexes catalytiques selon l'invention sont des composés (T) du titane. On utilise de préférence les composés du titane tétravalent parce qu'ils sont plus souvent liquides et en tout cas plus souvent et mieux solubles que ceux où ce métal se trouve à une valence inférieure à 4.

L'utilisation de composés oxygénés organiques (T) comprenant plusieurs radicaux organiques différents entre également dans le cadre de la présente invention.

Parmi les composés oxygénés organiques (T) du titane, ou peut citer:
— les alkoxydes, tels que $Ti(OC_3H_5)_4$, $Ti(OnC_3H_7)_4$, $Ti(OnC_4H_9)_4$, $Ti(OC_4H_9)_4$ et $Ti(O\text{-}tertC_4H_9)_4$,
— les phénoxydes, tels que $Ti(OC_6H_5)_4$,
— les carboxylates, tels que $Ti(OOCCH_3)_4$,

Les meilleurs résultats sont obtenus avec les tétraalkoxydes du titane.

Il va de soi que l'utilisation de plusieurs composés (T) différents du titane entre également dans le cadre de l'invention.

Il peut être avantageux, pour la fabrication de polymères d'alpha-oléfines de distribution large des poids moléculaires, d'utiliser en outre au moins un composé de métal de transition supplémentaire (réactif (4)) pour préparer les complexes catalytiques solides de l'invention. Ce composé supplémentaire est alors un composé (Z) choisi parmi les composés oxygénés organiques ét les composés halogénés du zirconium.

Ces composés (Z) répondent en tous points aux définitions et limitations énoncées ci-avant en rapport avex les composés (T).

A titre d'exemples de composés du zirconium (Z) utilisables, on peut citer:
— les alkoxydes, tels que $Zr(OC_4H_9)_4$,
— les phénoxydes, tels que $Zr(OC_6H_5)_4$,
— les oxyalkoxydes, tels que $Zr[OZr(OC_2H_5)_3]_4$,
— les carboxylates, tels que $Zr(OOCCH_3)_4$, $Zr(C_2O_4)_2$,
— les énolates, tels que l'acétylacétonate de zirconium,
— les tétrahalogénures, tels que $ZrCl_4$ et $ZrF_4$,
— les halogénures complexés au moven de divers donneurs d'électrons tels que $ZrCl_4 \cdot 8\,NH_3$, $ZrCl_4 \cdot 4\,NH_3$ et $ZrCl_4 \cdot 4\,C_5H_5N$,
— les oxyhalogénures, tels que $ZrOF_2$ et $ZrOCl_2 \cdot 8\,H_2O$,
— les halogénoalkoxydes, tels que $Zr(OC_4H_9)Cl_3$.

Les meilleurs résultats sont obtenus avec les tétralkoxydes et le tétrachlorure de zirconium.

Dans ce mode de réalisation particulier de l'invention, on préfère mettre ces différents composés (T) et (Z) en oeuvre comme décrit dans le brevet belge 840 378 déposé le 5. 4. 1976 au nom de la Demanderesse, dont le contenu est applicable en tout point au présent mode particulier de réalisation de l'invention.

Les complexes catalytiques solides utilisables selon la présente invention sont préparés enfin à partir de réactifs (3) qui doivent être des chlorures organoaluminiques de formule générale $AlR_nCl_{3-n}$ dans laquelle R le radical isobutyle et n est un nombre tel que $1 \leq n \leq 1,5$. Un chlorure organoaluminique tout particulièrement préféré et facilement est le dichlorure d'isobutylaluminium $Al(i\text{-}C_4H_9)Cl_2$.

Le choix du réactif (3) est une caractéristique essentielle de l'invention. C'est en effet la nature de ce réactif qui, de manière surprenante, est à la base de l'amélioration sensible de la morphologie des poly-

3

**0 000 007**

oléfines obtenues selon procédé de l'invention.

Ces chlorures organoaluminiques peuvent être préparés, éventuellement »in situ« et de préférence préalablement à leur mise en oeuvre, notamment en mélangeant les trialkylaluminiums correspondants avec des chlorures d'aluminium contenant plus de chlore que le chlorure que l'on souhaite obtenir. Il va de soi que la portée de l'invention n'est pas limitée à l'utilisation de chlorures organoaluminiques constitués exclusivement de composés répondant à la formule générale susmentionnée mais qu'elle s'étend aux produits techniques contenant, outre une proportion substantielle de ces composés, des sous-produits tels que les réactifs ayant servi à leur préparation. On préfère toutefois que ces produits contiennent au moins 80% en poids de chlorures organoaluminiques répondant à la formule générale.

On peut préparer les complexes catalytiques solides de l'invention au départ des réactifs (1), (2), (3) et éventuellement (4) ci-dessus selon toutes les méthodes induisant une réaction chimique entre eux.

On préfère réaliser la réaction de formation des complexes en milieu liquide. Pour ce faire, on peut opérer en présence d'un diluant, notamment lorsque les réactifs ne sont pas liquides eux-mêmes dans les conditions opératoires ou lorsqu'il n'y a pas assez de réactifs liquides. Lorsqu'on fait usage d'un diluant, on le choisit généralement parmi ceux qui sont capables de dissoudre au moins un de réactifs et en particulier parmi les alkanes, cycloalkanes et hydrocarbures aromatiques comprenant de 4 à 20 atomes de carbone comme par exemple l'isobutane, l'hexane, l'heptane, le cyclohexane, le benzène, le toluène, etc. On peut aussi utiliser des solvants polaires comme les éthers et les alcools comprenant de 1 à 12 atomes de carbone (éthanol et éther diéthylique, par exemple), le tétrahydrofuranne, la pyridine, le chlorurre de méthylène, etc. Lorsqu'on utilise un diluant dissolvant au moins un des réactifs, on préfère que la concentration totale du on des réactifs dissous soit supérieure à 5% en poids et de préférence à 20% en poids par rapport au diluant.

Dans tous les cas, que l'on utilise un diluant ou qu'il y ait suffisamment de réactifs liquides dans les conditions opératoires, le milieu réactionnel se présente de préférence sous la forme d'un liquide relativement visqueux dans lequel peuvent se trouver des matières solides à l'état dispersé.

L'ordre d'addition des réactifs est quelconque. Les réactifs (3) peuvent, en particulier, être introduits dans le milieu réactionnel à n'importe quel moment de la préparation du complexe catalytique solide.

Pour des raisons de commodité, on préfère cependant préparer ces complexes catalytiques solides selon l'une des méthodes ci-après:

1) on met en présence le réactif (1) et le réactif (2) en les mélangeant progressivement ou en les ajoutant l'un à l'autre; on ajoute ensuite progressivement le réactif (3);
2) on mélange, de préférence rapidement, le réactif (2) et le réactif (3), puis on ajoute le réactif (1);
3) on mélange simultanément et progressivement les trois réactifs.

Quelle que soit la méthode choisie, on préfère donc que l'addition du réactif (3) se fasse à la fin de la préparation des complexes catalytiques, c'est-à-dire au plus tôt pendant que les réactifs (1) et (2) sont mis en présence. Les meilleurs résultats sont obtenus lorsque le réactif (3) est mis en oeuvre après que les réactifs (1) et (2) ont été mis en prèsence dans leur totalité.

Les méthodes de préparation des complexes catalytiques solides selon, l'invention s'étendent également à la mise en oeuvre, à la place des réactifs (1) et (2) préformés, de magnésium, d'un composé organique hydroxylé tel qu'un alcool et du réactif (2).

La préparation de pareils complexes catalytiques est décrite dans le brevet belge 819 609 du 6. 9. 1974 au nom de la Demanderesse dont le contenu est applicable en tout point au présent mode particulier de réalisation de l'invention.

La pression sous laquelle on effectue la préparation des complexes catalytiques, la vitesse d'addition des réactifs et la durée de leur contact ne sont pas des facteurs critiques. Pour des raisons de commodité, on travaille généralement sous pression atmosphérique; la vitesse est choisie en général de manière à ne pas provoquer un échauffement brusque du milieu réactionnel dû à une auto-accélération éventuelle de la réaction; la durée peut varier généralement entre 5 minutes et 12 heures. On agite généralement le milieu réactionnel de manière á favoriser son homogénéisation pendant la durée de la réaction. La réaction peut être réalisée en continu on en discontinu.

La température à laquelle on met en présence le réactif (1) et le réactif (2) n'est pas critique. Pour des raisons de commodité, elle est généralement choisie entre 200 et −50° C, de préférence entre 150° C et la température ambiante (25° C). Par contre, lorsqu'on procède à la préparation des complexes catalytiques en faisant réagir le réactif (3) avec le mélange résultant de la mise en présence du réactif (1) et réactif (2), on constate, de manière surprenante, que la température à laquelle cette réaction est réalisée exerce une influence sur la morphologie de la poudre de polyoléfine obtenue finalement. Toutes autres choses étant égales, il est possible de renforcer l'action favorable du chlorure organoaluminique conforme à l'invention sur la grosseur, la dureté et la granulométrie des particules de la polyoléfine et sur son poids spécifique apparent, en choisissant convenablement la température à laquelle ce réactif (3) est ajouté ou produit résultant du mélange préalble des réactifs (1) et (2). Cette température est comprise entre 30 et 65° C. Les meilleurs résultats sont obtenus entre 45 et 60° C environ. La préparation des complexes catalytiques conformes à l'invention peut être avantageusement terminée par un traitement du mûrissage effectué à une température généralement équivalente ou supérieure à celle à laquelle a lieu la réaction avec le réactif (3) pendant une durée non critique allant de 5 minutes à 12 heures en général, de préférence pendant au moins 1 heure.

4

La quantité de composé (M), de composé (T) et de chlorure organoaluminique (A) à mettre en oeuvre de préférence sont précisées ci-après.

La quantité du ou des composés (T) à utiliser est définie par rapport à la quantité totale du ou des composés (M) utilisée. Elle peut varier dans une large mesure. En générale, elle est comprise entre 0,01 et 10 at.-g (atome-gramme) de métal présent dans le composé (T) par at.-g de magnésium présent dans le composé (M). On a observé que les performances des complexes catalytiques de l'invention sont optimales lorsqu'on utilise un rapport compris entre 0,025 et 5 at.-g de titane par at.-g de magnésium. Le meilleur compromis entre la productivité (c'est-à-dire la quantité de polymère produite rapportée à la quantité de complexe catalytique utilisée), et l'activité spécifique (c'est-à-dire la quantité de polymère produite rapportée à la quantité de titane et/ou de zirconium mise en oeuvre) des complexes catalytiques, d'une part, et la morphologie de la polyoléfine obtenue, d'autre part, est obtenu lorsque ce rapport varie entre 0,10 et 2 at.-g par at.-g environ.

La quantité de chlorure organoaluminique à mettre en oeuvre est définie également par rapport à la quantité totale du ou des composés (M) utilisée. Elle peut également varier dans une large mesure. En général, elle est compris entre 1 et 100 moles de chlorure organoaluminique par mole de composé (M). De préférence, cette quantité est comprise entre 1 et 20 moles par mole. Le meilleur compromis (tel que défini plus haut) est obtenu lorsque ce rapport est compris entre 2 et 10 moles par mole.

Les complexes catalytiques selon l'invention sont solides. Ils sont insolubles dans les alkanes et les cycloalkanes utilisables comme diluants. Ils peuvent être utilisés en polymérisation tels qu'ils sont obtenus, sans être séparés du milieu réactionnel de préparation. On peut toutefois les séparer de ce milieu réactionnel, notamment lorsqu'ils sont préparés en présence d'un solvant polaire, selon n'importe quel moven connu. Lorsque le milieu réactionnel est liquide, on peut utiliser par exemple la filtration, la décantation ou la centrifugation.

Après séparation, les complexes catalytiques peuvent être de manière à éliminer les réactifs en excés dont ils pourraient être encore imprégnes. Pour ce lavage, on peut utiliser n'importe quel diluant inerte et par exemple ceux qui sont utilisables comme constituants du milieu réactionnel tels que les alkanes et les cycloalkanes. Après lavage, les complexes catalytiques peuvent être séchés, par exemple, par balayage au moyen d'un courant d'azote sec ou sous vide.

Le mécanisme de la réaction de formation des complexes catalytiques de l'invention n'est pas connu. L'analyse élémentaire des complexes catalytiques, après séparation et lavage, montre qu'il s'agit bien de complexes chimiquement liés, produits de réactions chimiques, et non pas du résultat de mélanges ou de phénomènes d'adsorption. En effet, sil est impossible de dissocier l'un ou l'autre des constituants de ces complexes en utilisant des méthodes de séparation purement physiques.

Les systèmes catalytiques conformes à l'invention comprennent également un composé organométallique que sert d'activateur. On utilise les composés organométalliques des métaux des groupes la, IIa, IIb, IIIb et IVb du Tableau Périodique tels que les composés organométalliques du lithium, du magnésium, du zinc, de l'aluminium ou de l'etain. Les meilleurs résultats sont obtenus avec les composés organoaluminiques.

On peut utiliser des composés totalement alkylés dont les chaînes alkyles comprennent de 1 à 20 atomes de carbone et sont droites ou ramifiées tels que par exemple le n-butyllithium, le diéthylmagnésium, le diéthylzinc, le tétraéthylétain, le tétrabutylétain et les trialkylaluminiums.

On peut également utiliser les hydrures d'alkylmétaux dans lesquels les radicaux alkyles comprennent également de 1 à 20 atomes de carbone tels que l'hydrure de diisobutylaluminium et l'hydrure de triméthylétain. Conviennent également les alkylhalogénures de métaux dans lesquels les radicaux alkyles comprennent aussi de 1 à 20 atomes de carbone tels que le sesquichlorure d'éthylaluminium, le chlorure de diéthylaluminium et le chlorure de diisobutylaluminium.

On peut encore utiliser des composés organoaluminiques obtenus en faisant réagir des trialkylaluminiums ou des hydrures de dialkylaluminium dont les radicaux comprennent de 1 à 20 atomes de carbone avec des dioléfines comprenant de 4 à 20 atomes de carbone, et plus particulièrement les composés dénommés isoprénylaluminiums.

Pour la fabrication de certaines qualités de polyoléfines, on préfère utiliser les trialkylaluminiums dont les chaînes alkyles sont droites et comprennent de 1 à 18 atomes de carbone. On constate en effet, de manière tout à fait surprenante, que lorsque ces composés servent d'activateurs aux complexes catalytiques préparés conformément à l'invention, c'est-à-dire en faisant intervenir un réactif (3) que est un chlorure organoaluminique tel que défini plus haut, les distributions des poids moléculaires des polyoléfines obtenus sont plus larges, toutes autres conditions égales, que celles des polyoléfines obtenues en présence de complexes catalytiques préparés en faisant usage des réactifs (3) habituels (dichlorure d'éthylaluminium).

Ce résultat inattendu (distribution élargie des poids moléculaires) est particulièrement avantageux lorsque la polyoléfine est destinée à la fabrication d'objects de grande dimension tels que les fûts et grands récipients par des techniques d'extrusion-soufflage.

Le procédé de l'invention s'applique à la polymérisation des oléfines à insaturation terminale dont la molécule contient de 2 à 20 atomes, et de préférence de 2 à 6 atomes de carbone, telles que l'éthylène, le propylène, le butène-1, le 4-méthylpentène-1 et l'hexène-1. Il s'applique également également à la copolymérisation de ces oléfines entre elles ainsi qu'avec des dioléfines comprenant de 4 à 20 atomes de carbone de préférence. Ces dioléfines peuvent être des dioléfines aliphatiques non conjugées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjugées telles que le butadiène et l'isoprène.

Le procédé de l'invention s'applique particulièrement bien à la fabrication d'homopolymères de l'éthylène et de copolymères contenant au moins 90%molaires et de préférence 95%molaires d'éthylène.

La polymérisation peut être effectuée selon n'importe quel procédé conu: en solution ou en suspension dans un solvant ou un diluant hydrocarboné ou encore en phase gazeuse. Pour les procédés en solution ou en suspension, on utilise des solvants ou diluants analogues à ceux employés pour la préparation du complexe catalytique: ce sont de préférence des alkanes ou des cycloalkanes tels que l'isobutane, le pentane, l'hexane, l'heptane, le cyclohexane, le méthylcyclohexane ou leurs mélanges. On peut également opérer la polymérisation dans le monomère ou un des monomères maintenu à l'état liquide. Il est particulièrement avantageux de mettre en oeuvre des procédé de polymérisation dans lesquels les polymères sont générés directement sous forme de particules. Parmi ces procédés, on préfère les procédés de polymérisation en suspension dans un diluant hydrocarboné liquide dans les conditions de polymérisation qui, après séparation du monomère qui n'a pas réagi et du diluant, fournissent, en présence de systèmes catalytiques de l'invention des particules de polymère qui ont les caractéristiques morphologiques des poudres utilisées dans les procédés de transformation mentionnés plus haut.

La pression de polymérisation est comprise en général entre la pression atmosphérique et 100 k/cm$^2$, de préférence 50 kg/cm$^2$. La température est choisie généralement entre 20 et 200° C. Elle est de préférence entre 60 et 120° C de manière à obtenir directement le polymère sous forme solide. On n'observe aucune dégradation de la morphologie des particules de polyoléfine obtenues en présence des systèmes catalytiques de l'invention lorsqu'on abaisse la température de polymérisation dans cette zone préférée. Au contraire, lorsque des complexes catalytiques solides sont préparés à partir des réactifs (3) habituels de l'art antérieur, on constate que l'abaissement de la température de polymérisation exerce un effet néfaste sur la morphologie de la polyoléfine obtenu (les particules sont plus fines et moins dures).

La polymérisation peut être effectuée en continu ou en discontinu.

Le composé organométallique et le complexe catalytique peuvent être ajoutés séparément au milieu de polymérisation. On peut également les mettre en contact, à une température comprise entre −40 et 80° C, pendant une durée pouvant aller jusqu'à 2heures, avant de les introduire dans le réacteur de polymérisation. On peut aussi les mettre en contact en plusieurs étapes ou encore ajouter une partie du composé organométallique avant le réacteur ou encore ajouter plusieurs composés organométalliques différents.

La quantité totale de composé organométallique mise en oeuvre peut varier dans une large mesure. Elle est comprise en général entre 0,02 et 50 mmoles par dm$^3$ de solvant, de diluant ou de volume de réacteur et de préférence entre 0,5 et 2,5 mmoles par dm$^3$.

La quantité de complexe catalytique mise en oevre est déterminée em fonction de la teneur en titane du complexe catalytique. Elle est choisie en général de manière que la concentration soit comprise entre 0,001 et 2,5 et de préférence entre 0,01 et 0,25 mat.-g de titane ou de zirconium par dm$^3$ de solvant, de diluant ou de volume de réacteur (mat.-g = milliatome-gramme).

Le rapport des quantités de composé organométallique et de complexe catalytique n'est pas critique non plus. On le choisit en général de manière que le rapport composé organométallique/titane exprimé en mole/at.-g soit supérieur à 1 et de préférence supérieur à 10.

Le poids moléculaire moyen, et partant l'indice de fluidité (melt index) des polymères fabriqués selon le procédé de l'invention peut être réglé par l'addition au milieu de polymérisation d'un ou de plusieurs agent de modification du poids moléculaire comme l'hydrogène, le zinc ou le cadmium diéthyle, les alcools ou l'anhydride carbonique.

Le poids spécifique des homopolymères fabriqués suivant le procédé de l'invention peut être également réglé par l'addition au milieu de polymérisation d'un alkoxyde d'un métal des groupes IVa et Va du Tableau Pérodique. C'est ainsi qu'on peut fabriquer des polyéthylènes de poids spécifique intermediaire entre celui des polyéthylènes à haute densité classiques et celui des polyéthylènes prépares selon un procédé à haute pression.

Parmi les alkoxydes convenant pour ce réglage, ceux du titane et du vanadium dont les radicaux contiennent de 1 à 20 atomes de carbone chacun sont particulièrement efficaces. On peut citer parmi eux Ti(OCH$_3$)$_4$, Ti(CO$_2$H$_5$)$_4$, Ti[OCH$_2$CH(CH$_3$3)$_2$]$_4$, Ti(OC$_8$H$_{17}$)$_4$ et Ti(OC$_{16}$H$_{33}$)$_4$.

Le procédé de l'invention permet de fabriquer des polyoléfines avec des productivités très élevées. Ainsi, dans l'homopolymérisation de l'éthylène, la productivité exprimée en grammes de polyéthylène par gramme de complexe catalytique mis en oeuvre dépasse régulièrement 10 000 et dans certains cas 20 000. L'activité rapportée à la quantité de métaux de transition présente dans le complexe catalytique est également très élevée. Dans l'homopolymérisation de l'éthylène, également exprimée en grammes de polyéthylène par at.-g de titane mis en oeuvre, elle dépasse régulièrement 200 000. Dans les cas les plus favorables, elle est supérieure à 500 000. Elle est dans tous les cas au moins au niveau des activités conférées aux systèmes catalytiques préférés de l'art antérieur, comprenant les complexes catalytiques solides préparés à partir de dichlorure d'éthylaluminium comme réactif (3), et elle est même souvent supérieure à ces activités.

De ce fait, la teneur en résidus catalytiques des polymères fabriqués selon le procédé de l'invention est extrêmement basse. Plus particulièrement, la teneur en métal de transition résiduel est excessivement faible. Or ce sont les dérivés des métaux de transition que sont surtout gênants dans les résidus catalytiques en raison des complexes colorés qu'ils forment avec les antioxydants phénoliques habituellement utilisés dans les polyoléfines et du caractère toxique desdits métaux.

Dans le procédé de l'invention, la teneur des polymères en résidus gênants est tellement faible que l'on peut faire l'économie du traitement d'épuration (par exemple un traitement à l'alcool), qui est obligatoire lorsque la teneur en résidus catalytiques est élevée et qui est une opération coûteuse en matières premières et en énergie et nécessitant des immobilisations considérables.

Les poudres de polyoléfine fabriquées conformément à l'invention se caractérisent donc par une morphologie remarquable et peuvent être mises en oeuvre sous cette forme. C'est le cas en particulier des poudres des polymères d'éthylène. Les polyoléfines obtenus selon l'invention peuvent cependant être granulées et être mises en oeuvre sous forme de granules selon les techniques de moulage conventionnelles: par injection, par extrusion, par extrusion-soufflage, par calandrage, etc.

Les exemples qui suivent sont destinés à illustrer l'invention et n'en limitent pas la portée.

<center>Exemple 1 et exemple comparatif 2R</center>

On utilise les réactifs suivants:
(1) de l'éthylate de magnésium $Mg(OC_2H_5)_2$ vendu par Dynamit Nobel
(2) du tétrabutylate de titane $Ti(OnC_4H_9)_4$ vendu par Dynamit Nobel
(3) différents chlorures organoaluminiques définis ci-après.

On prépare une solution-mère (S) en chauffant ensemble, à 150° C, sous agitation et pendant 2 heures, 9 moles du réactif (2) et 4,5 moles du réactif (1). Dans ce mélange, le rapport atomique Ti/Mg vaut donc environ 2 at.-g/at.-g 500 ml de la solution-mère (S), dans laquelle il y a eu dissolution quasicomplète du réactif (1) et qui a été préalablement refroidie, sont additionnés de 1000 ml d'hexane, de manière à obtenir une solution à environ 500 g/l.

Les différents chlorures organoaluminiques mis en oeuvre sont:
— dans l'exemple 1, du dichlorure d'isobutylaluminium $Al(iC_4H_9)Cl_2$;
— dans l'exemple comparatif 2R, du dichlorure d'éthylaluminium $Al(C_2H_5)Cl_2$.

Les chlorures organoaluminiques mis en oeuvre sont des produits commerciaux vendus par Schering.

Ces chlorures organoaluminiques sont mis en oeuvre sous forme de solutions dans l'hexane à 400 g/lit. Ils sont ajoutés progressivement à des fractions de solutions-mères (S), diluées comme indiqué plus haut, à une température d'environ 50° C et sous agitation, pendant environ 90 minutes. A la fin de cette addition, le mélange réactionnel est soumis à un murissage pendant 1 heures à 60° C. La quantité de chlorure organoaluminique mise en oeuvre dans chacun des exemples est telle que le rapport molaire chlorure organoaluminique/éthylate de magnésium vaut environ 10.

Les complexes catalytiques ainsi formés sont utilisés tels quels, sans être séparés de leur milieu réactionnel, dans des essais de polymérisation dont les conditions générales sont définies ci-dessous.

On introduit des quantités déterminées de complexe catalytique et 0,5 mmole de triéthylaluminium dans un autoclave de 1,5 l contenant 0,5 l d'hexane. La température de l'autoclave est portée ensuite à 85° C environ. On introduit de l'éthylène sous une pression partielle de 10 kg/cm² et de l'hydrogène sous une pression partielle de 4 kg/cm².

On poursuit la polymérisation pendant 1 h sous agitation en maintenant la pression totale constante par addition continue d'éthylène. Après 1 h, on dégaze l'autoclave et on recueille le polyéthylène ainsi fabriqué.

Le Tableau I mentionne les conditions particulieŕres à chaque essai, les résultats obtenus et les caractéristiques morphologiques des polyéthylènes fabriques.

Dans ce Tableau, et dans les exemples qui suivent:
— PSA signifie »poids spécifique apparent« du polymère et est exprimé en $kg/dm^3$ ;
— D signifie »dureté« du polymère et est exprimée en pour cent. Cette dureté est appréciée en mesurant le PSA du polymère, de manière connue, par écoulement, avant et après un broyage d'une durée de 6 secondes dans un broyeur à lamelles tournant à plus de 20 000 trs/min. La dureté est donnée par la formule empirique

$$\frac{\text{PSA avant broyage}}{\text{PSA après broyage}} \times 100 \ (\%)$$

Plus la valeur obtenue est élevée, plus les particules de polymère sont dures;
— la distribution granulométrique G du polymère est aussi exprimée en pour cent et est mesurée après broyage dans les conditions définies ci-dessus.
— MI représente l'indice de fluidité du polyéthène, exprimé en g/10 min. et mesuré selon la norme

<center>7</center>

## 0 000 007

ASTM–D 1238–70.
- la quantité de suspension en complexe catalytique mise en oeuvre est exprimée indirectement par le poids, en mg, de titane qu'elle contient.
- HLMI représente l'indice de fluidité du polyéthylène sous forte charge, exprimé en g/10 min., mesuré selon la norme ASTM–D 1238–70.
- le rapport HLMI/MI est représentatif de l'étalement de la distribution des poids moléculaires. Il est d'autant plus élevé que la distribution est large.

Tableau I

| | Exemple No | |
| --- | --- | --- |
| | 1 | 2R |
| Nature du chlorure organoaluminique (réactif (3)) | $Al(iC_4H_9)Cl_2$ | $Al(C_2H_5)Cl_2$ |
| Quantité de complexe catalytique utilisée (mg Ti) ($\pm$ 10% près) | 0,6 | 0,5 |
| Quantité de polyéthylène (PE) recueille (g) | 83 | 62 |
| Activité spécifique (g PE/h $\times$ g Ti $\times$ kg/cm$^2$ C$_2$H$_4$) | 13800 | 12900 |
| MI | 0,88 | 0,62 |
| PSA avant broyage (kg/dm$^3$) | 0,33 | 0,31 |
| PSA après broyage (kg/dm$^3$) | 0,35 | 0,33 |
| D (%) | 94 | 94 |
| G pourcentages cumulés de particules de diamètre moyen | | |
| inferieur à 44 microns | 0 | 0 |
| inferieur à 100 microns | 2 | 2 |
| inferieur à 125 microns | 3,5 | 7 |
| inferieur à 250 microns | 20 | 60 |
| superieur à 500 microns | 58 | 6 |
| Diamètre moyen des particules (mm) | 0,54 | 0,22 |

Le Tableau I montre que l'utilisation d'un chlorure organoaluminique répondant à la définition de l'invention comme réactif (3), (exemple) conduit, avec des activités catalytiques améliorées, à des polyéthylènes qui contiennent une proportion de grosses particules nettement supérieure à celle présente dans les polyéthylènes obtenus avec le réactif (3) habituel de l'art antérieur (exemple 2R).

### Exemple 3 et 4R

L'exemple 4R est donné à titre comparatif.

Des complexes catalytiques sont préparés conformément aux exemples précédents sauf que les réactifs (2) et (1) sont mélangés que le rapport atomique Ti/Mg soit d'environ 1,2 at.-g/at.-g, que la quantité de chlorure organoaluminique mise en oeuvre est telle que le rapport molaire chlorure organoaluminique/éthylate de magnésium vaut environ 3,5 et que le chlorure organoaluminique est ajouté à une température d'environ 30° C .

Dans l'exemple 3, le complexe catalytique est préparé en faisant usage de dichlorure d'isobutylaluminium comme chlorure organoaluminique.

Dans l'exemple 4R, le complexe catalytique est préparé en faisant usage de dichlorure d'éthylaluminium comme chlorure organoaluminique.

Les complexes catalytiques obtenus sont utilisés sous forme de suspension dans le milieu qui a servi à les préparer pour effectuer des essais de polymérisation de l'éthylène dans des conditions générales absolument identiques à celles décrites dans les exemples précédents.

Les caractéristiques morphologiques des polyéthylènes obtenus sont rassamblés dans le Tableau II.

8

Tableau II

| | Exemple No | |
| --- | --- | --- |
| | 3 | 4R |
| Nature du chlorure organoaluminique (réactif (3)) | $Al(iC_4H_9)Cl_2$ | $Al(C_2H_5)Cl_2$ |
| PSA du polyéthylène | | |
| avant broyage (kg/dm³) | 0,35 | 0,34 |
| après broyage (kg/dm³) | 0,37 | 0,38 |
| D (%) | 94 | 89 |
| G pourcentages cumulés de particules de diamètre moyen | | |
| inférieur à 44 microns | 0 | 0 |
| inférieur à 100 microns | 2 | 7 |
| inférieur à 125 microns | 8 | 20 |
| inférieur à 250 microns | 27 | 77 |
| supérieur à 500 microns | 46 | 5 |
| diamètre moyen des particules (mm) | 0,41 | 0,17 |

On constate donc que les résultats avantageux de l'utilisation d'un chlorure organoaluminique (réactif (3)) répondant à la définition de l'invention restent acquis malgré des modifications importantes des rapports molaires entre réactifs.

Exemples 5 à 9

Des complexes catalytiques sont préparés conformément aux exemples 1 et 2R en faisant usage de dichlorure d'isobutylaluminium comme chlorure organoaluminique.

Toutefois, la solution dans l'hexane de ce réactif est ajoutée à la solution-mère (S) à des températures variables.

Des essais de polymérisation de léthylène sont effectués avec les complexes catalytiques ainsi préparés dans les conditions générales décrites aux exemples 1 et 2R.

Les conditions particulières à chaque essai, les résultats obtenus et les caractéristiques morphologiques des polyéthylènes fabriqués sont rassamblés dans le Tableau III.

Tableau III

| | Exemple No | | | | |
|---|---|---|---|---|---|
| | 5 | 6 | 7 | 8 | 9 |
| Tempéraure à laquelle le chlorure organo-aluminique (réactif (3)) est ajouté (°C) | 0 | 30 | 45*) | 60 | à reflux |
| Quantité de complexe catalytique utilisée (mg Ti) (±10% près) | 0,6 | 0,6 | 0,6 | 0,6 | 0,7 |
| Quantité de polyéthylène (PE) recueillie (g) | 62 | 82 | 66 | 95 | 97 |
| Activité spécifique (g PE/h × g Ti × kg/cm$^2$ C$_2$H$_4$) | 9700 | 12800 | 10300 | 14800 | 13500 |
| MI | 0,57 | 0,73 | 0,64 | 3,8 | 1,25 |
| PSA avant broyage (kg/dm$^3$) | 0,24 | 0,29 | 0,32 | 0,31 | 0,32 |
| PSA après broyage (kg/dm$^3$) | 0,32 | 0,32 | 0,33 | 0,33 | 0,34 |
| D (%) | 75 | 91 | 97 | 94 | 94 |
| G pourcentages cumulés de particules de diamètre moyen | | | | | |
| inférieur à 44 microns | 0 | 0 | 0 | 0 | 0 |
| inférieur à 100 microns | 0 | 0 | 0 | 0 | 1 |
| inférieur à 125 microns | 1 | 0,5 | 0,5 | 0,5 | 3 |
| inférieur à 250 microns | 52 | 15 | 13 | 5 | 20 |
| supérieur à 500 microns | 1 | 30 | 42 | 65 | 42 |
| Diamètre moyen des particules (mm) | 0,25 | 0,40 | 0,45 | 0,60 | 0,41 |

*) le mûrissage subséquent est effectué à 45°C au lieu de 60°C.

On constate donc, que dans le cas particulier de l'utilisation de dichlorure d'isobutylaluminium comme réactif (3), les résultats relatifs à la morphologie du polymère et les performances catalytiques sont supérieures lorsque la température à laquelle ce composé est mis en oeuvre est supérieure à 30°C. En outre, l'augmentation de la température à laquelle ce composé est ajouté n'entraîne pas de diminution du PSA ni d'élargissement de la distribution granulométrique.

### Exemples 10 à 12 et exemples comparatifs 13R à 15R

Des complexes catalytiques sont préparés conformément aux exemples 1 à 2R en faisant usage de dichlorure d'isobutylaluminium mis en oeuvre à 50°C, comme composé organoaluminique dans les exemples 10 à 12, et de dichlorure d'éthylaluminium, mis en oeuvre à 30°C, dans les exemples 13R à 15R.

Des essais de polymérisation de l'éthylène sont effectués avec les complexes catalytiques ainsi préparés dans les conditions générales décrites aux exemples 1 à 5R mais en faisant usage des composés organoaluminiques suivants comme activateurs des systèmes catalytiques:
—  du triéthylaluminium Al(C$_2$H$_5$)$_3$ dans les exemples 10 et 13R;
—  du trioctylaluminium Al(C$_8$H$_{17}$)$_3$ dans les exemples 11 et 14R;
—  du trioctadecylaluminium Al(C$_{18}$H$_{37}$)$_3$ dans les exemples 12 et 15R.

Les conditions particulières à chaque essai, les résultats obtenu et les caractéristiques des polyéthylènes fabriqús sont rassemblés au Tableau IV.

Tableau IV

| | Exemples No | | | | | |
|---|---|---|---|---|---|---|
| | 10 | 11 | 12 | 13R | 14R | 15R |
| Nature du chlorure organo-aluminique (réactif (3)) | Al(iC$_4$H$_4$9)Cl$_2$ | | | | Al(C$_2$H$_5$)Cl$_2$ | |
| Nature du composé organo-aluminique (activateur) | Al(C$_2$H$_5$)$_3$ | Al(C$_8$H$_{17}$)$_3$ | Al(C$_{18}$H$_{37}$)$_3$ | id. 13 | id. 14 | id. 15 |
| Quantité de complexe cataly-tique utilisée (mg Ti) | 0,6 | 0,6 | 0,6 | 0,7 | 0,7 | 0,7 |
| Quantité de PE recueillie (g) | 55 | 142 | 79 | 78 | 90 | 116 |
| Activité spécifique (g PE/h $\times$ g Ti $\times$ kg/cm$^2$ C$_2$H$_4$) | 9800 | 25400 | 14100 | 11500 | 26500 | 17000 |
| MI | 0,52 | 0,78 | 0,11 | 0,79 | 0,54 | 0,20 |
| HLMI | 17,52 | 32,72 | 5,40 | 24,32 | 19,35 | 8 |
| Rapport HLMI/MI | 33 | 42 | 49 | 30 | 35 | 38 |
| PSA avant broyage (kg/cm$^3$) | 0,33 | 0,20 | 0,31 | 0,32 | 0,25 | 0,27 |
| PSA après broyage (kg/dm$^3$) | 0,35 | 0,26 | 0,31 | 0,35 | 0,31 | 0,32 |
| G pourcentages cumulés de particules de diamètre moyen | | | | | | |
| inférieur à 44 microns | 0 | 0 | 0 | 0 | 0 | 0 |
| inférieur à 100 microns | 1,5 | 1 | 1 | 2 | 1 | 0,5 |
| inférieur à 125 microns | 4,5 | 3 | 3,5 | 5,5 | 2,5 | 1,5 |
| inférieur à 250 microns | 15 | 20 | 20 | 71 | 56 | 43 |
| supérieur à 500 microns | 65 | 65 | 44 | 7 | 2,5 | 5 |
| Diamètre moyen des particules (mm) | 0,56 | 0,40 | 0,46 | 0,22 | 0,22 | 0,25 |

L'examen de ce Tableau permet de conclure que lorsqu'on fait usage de chlorures organoaluminiques (réactifs (3)) conformes à l'invention, on obtient dans des conditions de polymérisation strictement indentiques, des polyéthylènes, qui, outre leur morphologie plus avantageuse, présentent des distributions des poids moléculaires plus larges que lorsque les complexes catalytiques sont préparés avec le réactif (3) préféré de l'art antérieur.

**Revendications**

1. Procédé pour la polymérisation des alpha-oléfines effectué en présence d'un systéme catalytique comprenant un composé organométallique d'un métal des groupes Ia, IIa, IIb, IIIb et IVb du Tableau Périodique et d'un complexe catalytique solide préparé en faisant réagir entre eux:
(1) au moins un composé (M) choisi parmi les composés oxygénés organiques du magnésium ne contenant que des liaisons magnésium-oxygène-radical organique;
(2) au moins un composé (T) choisi parmi les composés oxygénés organiques du titane ne contenant que des liaisons titane-oxygène-radical organique;
(3) au moins un halogénure d'aluminium (A), caractérisé en ce que ce dernier est choisi parmi les chlorures organoaluminiques de formule général AlR$_n$Cl$_{3-n}$ dans laquelle R est le radical isobutyle et n est un nombre tel que $1 \leq n \leq 1,5$ et en ce que la température du milieu réactionnel pendant que le chlorure organoaluminique est mis en oeuvre est comprise entre 30 et 65° C.
2. Procédé selon la revendication 1, caractérisé en ce que le chlorure organoaluminique est le dichlorure d'isobutylaluminium.

3. Procédé selon la revendication 1 ou 2, caractérisé en ce que le composé (M) est choisi parmi les dialkoxydes de magnésium et le composé (T) parmi les tétraalkoxydes du titane.

4. Procédé selon l'une quelconque des revendications 1 à 3, caractérisé en ce que le complexe catalytique solide est préparé en faisant réagir entre eux, outre le composé (M), le composé (T) et l'halogénure d'aluminium (A), un composé (Z) choisi parmi les composés oxygénés organiques et les composés halogénés du zirconium.

5. Procédé selon l'une quelconque des revendications 1 à 4, caractérisé en ce que le complexe catalytique solide est préparé en mettant en oeuvre l'halogénure d'aluminium (A) à la fin de la préparation.

6. Procédé selon l'une quelconque des revendications 1 à 5, caractérisé en ce que les quantités de composés (T), (M) et (A) mises en oeuvre pour préparer le complexe catalytique sont telles que le rapport entre la quantité de titane et la quantité de magsésium est compris entre 0,025 et 5 at.-g/at.-g et le rapport entre la quantité de composé (A) et la quantité de composé (M) est compris entre 1 et 20 moles/mole.

7. Procédé selon l'une quelconque des revendications 1 à 6, caractérisé en ce que le procédé de polymérisation est un procédé de polymérisation en suspension dans un diluant hydrocarboné liquide dans les conditions de polymérisation.

8. Procédé pour la préparation de complexes catalytiques solides dans lequel on fait réagir entre eux:
(1) au moins un composé (M) choisi parmi les composés organiques du magnésium ne contenant que des liaisons magnésium-oxygène-radical organique;
(2) au moins un composé (T) choisi parmi les composés oxygénés organiques du titane ne contenant que des liaisons titane-oxygène-radical organique;
(3) au moins un halogénure d'aluminium (A), caractérisé en ce que ce dernier est choisi parmi les chlorures organoaluminiques de formule générale $AlR_nCl_{3-n}$ dans laquelle R est le radical isobutyle et n est un nombre tel que $1 \leq n \leq 1,5$ et en ce que la température du milieu réactionnel pendant que le chlorure organoaluminique est mis en oeuvre est comprise entre 30 et 65° C.

## Patentansprüche

1. Verfahren zur Polymerisation von alpha-Olefinen durchgeführt in Anwesenheit eines katalytischen Systems enthaltend eine organometallische Verbindung eines Metalls der Gruppen Ia, IIa, IIb, IIIb und IVb des periodischen Systems und eines festen katalytischen Komplexes, dadurch hergestellt, daß man miteinander reagieren läßt:
(1) mindestens eine Verbindung (M) ausgewählt unter den sauerstoffhaltigen organischen Magnesiumverbindungen, die nur Bindungen Magnesium-Sauerstoff-organisches Radikal enthalten;
(2) mindestens eine Verbindung (T) ausgewählt unter den organischen sauerstoffhaltigen Titanverbindungen, die nur Bindungen Titan-Sauerstoff-organisches Radikal enthalten;
(3) mindestens ein Aluminiumhalogenid (A), dadurch gekennzeichnet, daß dieses letztere ausgewählt ist unter den Organoaluminiumchloriden der allgemeinen Formel $AlR_nCl_{3-n}$, in welcher R der Isobutylrest und n eine Zahl derart ist, daß $1 \leq n \leq 1,5$ und daß die Temperatur des Reaktionsmilieus während des Einsatzes des Organoaluminiumchlorids zwischen 30 und 65° C liegt.

2. Verfahren gemäß Anspruch 1, dadurch gekennzeichnet, daß das Organoaluminiumchlorid Isobutylaluminiumchlorid ist.

3. Verfahren gemäß einem der Ansprüche 1 oder 2, dadurch gekennzeichnet, daß die Verbindung (M) ausgewählt ist unter den Dialkoxiden des Magnesiums und die Verbindung (T) ausgewählt ist unter den Titantetraalkoxiden.

4. Verfahren gemäß einem der Ansprüche 1—3, dadurch gekennzeichnet, daß der feste katalytische Komplex hergestellt ist dadurch, daß man miteinander reagieren läßt neben der Verbindung (M), der Verbindung (T) und dem Aluminiumhalogenid (A) eine Verbindung (Z) ausgewählt unter den organischen sauerstoffhaltigen Verbindungen und den halogenhaltigen Verbindungen des Zirkons.

5. Verfahren gemäß einem der Ansprüche 1—4, dadurch gekennzeichnet, daß der feste katalytische Komplex hergestellt ist indem das Aluminiumhalogenid (A) am Ende der Herstellung eingesetzt wird.

6. Verfahren gemäß einem der Ansprüche 1—5, dadurch gekennzeichnet, daß die eingesetzten Mengen der Verbindungen (T), (M) und (A) zur Herstellung des katalytischen Komplexes derart sind, daß das Verhältnis zwischen der Titanmenge und der Magnesiummenge zwischen 0,025 und 5 at.-g/at.-g und das Verhältnis zwischen der Menge der Verbindung (A) und der Menge der Verbindung (M) zwischen 1 und 20 Mol/Mol liegt.

7. Verfahren gemäß einem der Ansprüche 1—6, dadurch gekennzeichnet, daß das Polymerisationsverfahren ein Suspensions-Polymerisationsverfahren in einem Kohlenwasserstoff-Verdünnungsmittel, welches unter den Polymerisationsbedingungen flüssig ist, ist.

8. Verfahren zur Herstellung fester katalytischer Komplexe, wobei miteinander reagieren gelassen werden:
(1) mindestens eine Verbindung (M) ausgewählt unter den organischen sauerstoffhaltigen Magnesiumverbindungen, die nur Bindungen Magnesium-Sauerstoff-organisches Radikal enthalten;
(2) mindestens eine Verbindung (T) ausgewählt unter den organischen sauerstoffhaltigen Titanverbindungen, die nur Bindungen Titan-Sauerstoff-organisches Radikal enthalten;

(3) mindestens ein Aluminiumhalogenid (A), dadurch gekennzeichnet, daß letzteres ausgewählt ist unter den Organoaluminiumchloriden der allgemeinen Formel $AlR_nCl_{3-n}$, in welcher R der Isobutyl-rest und n eine Zahl derart ist, daß $1 \leq n \leq 1,5$ ist, und daß die Temperatur des Reaktionsmilieus während des Einsatzes des Organoaluminiumchlorides zwischen 30 und 65° C liegt.

**Claims**

1. Process for the polymerisation of alpha-olefines effected in the presence of a catalyst system comprising an organometallic compound of a metal of groups Ia, IIa, IIb, IIIb und IVb of the Periodic Table and of a solid catalyst complex prepared by reacting together:
(1) at least one compound (M) chosen from among the oxygen-containing organic compounds of magnesium, which only contain magnesium-oxygen-organic radical bonds;
(2) at least one compound (T) chosen from among the oxygen-containing organic compounds of titanium which only contain titanium-oxygen-organic radical bonds; and
(3) at least one aluminium halide (A), characterised in that the latter is chosen from among the organo-aluminium chlorides of the general formula $AlR_nCl_{3-n}$, in which R is the isobutyl radical an n is a number such that $1 \leq n \leq 1.5$ and in that the temperature of the reaction medium during the period that the organo-aluminium chloride is employed is between 30 and 65° C.

2. Process according to Claim 1, characterised in that the organo-aluminium chloride is isobutyl-aluminium dichloride.

3. Process according to Claim 1 or 2, characterised in that the compound (M) is chosen from among the magnesium dialkoxides and the compound (T) is chosen from among the titanium tetraalkoxides.

4. Process according to any one of Claims 1 to 3, characterised in that the solid catalyst complex is prepared by reacting together, in addition to the compound (M), the compound (T) and the aluminium halide (A), a compound (Z) chosen from among the organic oxygen-containing compounds of zirconium and the halogen-containing compounds of zirconium.

5. Process according to any one of Claims 1 to 4, characterised in that the solid catalyst complex is prepared by employing the aluminium halide (A) at the end of the preparation.

6. Process according to any one of Claims 1 to 5, characterised in that the amounts of compounds (T), (M) and (A) employed in preparing the catalyst complex are such that the ratio of the amount of titanium to the amount of magnesium is between 0.025 and 5 gram-atom/gram-atom and the ratio of the amount of compound (A) to the amount of compound (M) is between 1 and 20 moles/mole.

7. Process according to any one of Claims 1 to 6, characterised in that the polymerisation process is a suspension polymerisation process in a hydrocarbon diluent which is liquid under the polymerisation conditions.

8. Process for the preparation of solid catalyst complexes in which there are reacted together:
(1) at least one compound (M) chosen from among the organic compounds of magnesium which only contain magnesium-oxygen-organic radical bonds;
(2) at least one compound (T) chosen from among the oxygen-containing organic compounds of titanium which only contain titanium-oxygen-organic radical bonds; and
(3) at least one aluminium halide (A), characterised in that the latter is chosen from among the organo-aluminium chlorides of the general formula $AlR_nCl_{3-n}$, in which R is the isobutyl radical and n is a number such that $1 \leq n \leq 1.5$ and in that the temperature of the reaction medium during the period that the organo-aluminium chloride is employed is between 30 and 65° C.